(19) Europäisches Patentamt
European Patent Office
Office européen des brevets

(11) EP 1 781 577 B1

(12) **FASCICULE DE BREVET EUROPEEN**

(45) Date de publication et mention de la délivrance du brevet:
**23.04.2008 Bulletin 2008/17**

(21) Numéro de dépôt: **05795981.9**

(22) Date de dépôt: **08.08.2005**

(51) Int Cl.:
***C02F 5/02*** *(2006.01)*

(86) Numéro de dépôt international:
**PCT/FR2005/002051**

(87) Numéro de publication internationale:
**WO 2006/021672 (02.03.2006 Gazette 2006/09)**

(54) **APPAREIL DE DECARBONATATION CATALYTIQUE DES EAUX**

KATALYTISCHE DEKARBONISIERUNGSVORRICHTUNG

CATALYTIC DECARBONATION APPLIANCE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **19.08.2004 FR 0408984**
**15.10.2004 FR 0410949**

(43) Date de publication de la demande:
**09.05.2007 Bulletin 2007/19**

(73) Titulaire: **DEGREMONT**
**92500 Rueil-Malmaison (FR)**

(72) Inventeur: **BARRAQUÉ, Christian**
**F-95110 SANNOIS (FR)**

(74) Mandataire: **Largeau, Béatrice et al**
**Cabinet Jolly**
**54, rue de Clichy**
**F-75009 Paris (FR)**

(56) Documents cités:
**FR-A- 2 426 024** **FR-A- 2 656 295**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 781 577 B1

## Description

La présente invention concerne la décarbonatation des eaux. Elle a plus particulièrement pour objet des perfectionnements apportés aux appareils dits de décarbonatation catalytique et à leur utilisation.

REACTIONS DE BASE DE LA DECARBONATATION

On sait que les eaux naturelles contiennent un grand nombre de substances minérales dissoutes, en proportions très variables. Les unes sont habituellement présentes dans toutes les eaux en concentration appréciable, les autres n'existent qu'à l'état de traces. Seules les premières sont concernés par la présente invention.
Ces substances dissoutes comprennent :

- des anions : carbonates et bicarbonates, sulfates, chlorures et nitrates, silice ;
- et des cations : calcium, magnésium et métaux alcalins (sodium principalement).

Pour se conformer à l'usage courant, les ions seront mentionnés ci-après sous la formule de leurs sels, mais, en pratique, il ne faut pas oublier qu'aux concentrations usuelles des eaux naturelles, les sels dissous sont totalement dissociés en anions $HCO_3^-$ ou $CO_3^{--}$, $SO_4^{--}$, $Cl^-$ et en cations $Ca^{++}$, $Mg^{++}$, $Na^+$, etc. et qu'il est donc très simplificateur de les regrouper arbitrairement, par exemple en associant systématiquement le sodium au chlorure ou le calcium au bicarbonate. En fait, les cations ne s'associent aux anions que lorsqu'ils précipitent sous forme insoluble, conformément aux lois de Berthollet.
Au début des réactions d'épuration des eaux, ils sont totalement libres et ce n'est que pour se conformer aux habitudes traditionnelles qu'a été adoptée l'écriture classique de ces réactions sous forme de molécules, et non sous forme d'ions.
Ces réactions, bien connues dans la technique, vont être rappelées ci-après.

ACTION DE LA CHAUX SUR LE BICARBONATE DE CALCIUM

<u>1) Cas d'une eau contenant uniquement des sels de calcium</u>

Dans ce cas, c'est la réaction fondamentale de la décarbonatation qui s'applique, basée sur la grande différence de solubilité entre le bicarbonate de calcium et le carbonate neutre :

$$Ca(HCO_3)_2 + Ca(OH)_2 \longrightarrow 2\ CaCO_3\downarrow + 2\ H_2O \qquad (1)$$

La solubilité du $CaCO_3$ et son équilibre avec le $CO_2$ libre ou dit "semi-combiné" ont fait l'objet d'innombrables études. Les divers travaux cités au Mémento Technique de l'Eau Degrémont, Edition du Cinquantenaire, 1988, définissent les conditions d'équilibre d'une eau avec le précipité de $CaCO_3$. Les travaux de Pourbaix enseignent la solubilité du carbonate de calcium en fonction de nombreux facteurs et permettent de prévoir la quantité théorique de carbonate de calcium restant en solution, si la dose de chaux utilisée est exactement stoechiométrique. Cette quantité correspond habituellement à des valeurs comprises entre 0,2 et 0,3 milliéquivalent TAC / litre (TAC : titre en bicarbonate ; voir ci-après), mais ce chiffre est très rarement atteint dans la pratique.
Le calcium correspondant aux anions forts, sulfates, chlorures, nitrates, désigné couramment sous le nom de dureté permanente de l'eau, reste naturellement en solution, la chaux n'étant pas susceptible de réagir avec ces divers sels aux concentrations habituelles des eaux brutes.
Si l'on considère l'alcalinité restant en solution dans l'eau traitée, dans le cas d'une eau brute purement calcaire, trois cas sont à envisager :

1. Il y a une quantité insuffisante de chaux : une partie du bicarbonate de calcium reste en solution, de sorte que sont simultanément présents dans l'eau $Ca(HCO_3)_2$ et $CaCO_3$, à la limite de solubilité de ce dernier.
2. Le dosage est correct : il ne subsiste que la fraction soluble du $CaCO_3$ dans l'eau.
3. Il y a un excès de chaux : de la chaux libre en excès co-existe avec le carbonate de calcium à sa limite de solubilité.

On rappelle que le titrage de l'alcalinité d'une eau comporte deux mesures :

- le titre alcalimétrique (en anglais, p-alkalinity), ou TA, obtenu par dosage au moyen d'une solution titrée d'acide dilué, l'indicateur de virage étant la phénol-phtaléine à pH = 8,2/8,3 ;
- le titre alcalimétrique complet, (en anglais, m-alkalinity), ou TAC, défini par_dosage au moyen de la même solution, mais par virage de l'indicateur méthyl-orange, à pH = 3,5/4,5.

Cas d'une eau contenant à la fois du calcium et du magnésium :

Cette situation est celle que l'on rencontre en général, les eaux purement calciques étant exceptionnelles.

Dans ce cas, l'eau est alors caractérisée par les titres (concentrations) définis ci-après :

- TH (Titre Hydrotimétrique) = T.Ca + T.Mg (Titre en calcium + Titre en magnésium),
- TAC = Titre en bicarbonate (dureté temporaire de l'eau).

La différence TH -TAC représente le Titre Hydrotimétrique dû aux sels d'anions forts $(SO_4^{--} + Cl^- + NO_3^{--})$ (dureté permanente de l'eau).

Dans ce cas, la chaux provoque la formation de $CaCO_3$ jusqu'à épuration totale de la fraction calcique du TAC, qui est réduite à la solubilité à froid du $CaCO_3$.

L'eau contient alors la totalité du TMg et un TCa égal au TCa initial diminué des milliéquivalents TAC précipités à l'état de carbonate.

Si on ajoute de la chaux en excès, on provoque la réaction secondaire suivante :

$$Ca\,(OH)_2 + Mg\,(SO_4 \text{ ou } Cl_2) \longrightarrow Mg\,(OH)_2\downarrow + Ca\,(SO_4 \text{ ou } Cl_2) \qquad (2)$$

Il y a précipitation de magnésie insoluble et passage en solution du calcium, qui remplace purement et simplement le magnésium.

Sauf dans le cas exceptionnel d'eaux très séléniteuses, ce calcium reste soluble, la solubilité du sulfate de calcium dans les eaux froides étant de l'ordre de 2 grammes par litre, valeur très supérieure à celle qui résulte de la réaction (2) ci-dessus.

Pratiquement, cette addition ne modifie pas le TH total de l'eau épurée ; le TA et le TAC sont légèrement majorés du fait de la solubilité dans l'eau de la magnésie (de l'ordre de 0,1 milliéquivalent / litre) et restent pratiquement constants, tant que la magnésie n'est pas totalement précipitée. A l'épuration optimale, on aura dans l'eau un peu de magnésie libre, de sorte que TA est très légèrement supérieur à TAC/2.

ACTION DE LA SOUDE SUR LE BICARBONATE DE CALCIUM

Cette méthode est une variante du procédé précédemment décrit de traitement à la chaux, soit lorsqu'on désire à la fois décarbonater et adoucir l'eau traitée, soit lorsque l'emploi de la soude caustique apparaît, logiquement ou économiquement, plus avantageux que celui de la chaux.

1. Dans un premier temps se produit la réaction (3) ci-après :

$$Ca\,(HCO_3)_2 + 2\,NaOH \longrightarrow CaCO_3\downarrow + 2\,Na_2CO_3 + 2\,H_2O \qquad (3)$$

2. S'il existe encore, après cette précipitation, suffisamment d'ions calcium associés à des sulfates ou à des chlorures, la réaction suivant se produit :

$$Na_2CO_3 + Ca^{++} \longrightarrow CaCO_3\downarrow + 2\,Na^+ \qquad (4).$$

Une telle réaction est par exemple la suivante :

$$Na_2CO_3 + CaSO_4 \longrightarrow \underline{CaCO_3}\downarrow + Na_2SO_4 \quad (5)$$

La soude agit alors comme si 2 NaOH remplaçaient 1 Ca $(OH)_2$ et 1 $Na_2CO_3$, mais ceci uniquement si l'eau brute contient assez de calcium lié à des sulfates ou chlorures (dureté permanente) pour permuter le calcium avec le sodium du $Na_2CO_3$.

On ne peut réduire le TAC à moins de 0,6 milliéquivalent / litre que si tout le $Na_2CO_3$ produit par la réaction (3) est combiné avec suffisamment de calcium pour le précipiter à l'état de $CaCO_3$, c'est-à-dire si le titre en calcium de l'eau brute, TCa, est égal ou supérieur à 2 TAC.

Si le TCa est inférieur à 2 TAC et si on a calculé la dose de NaOH en fonction de ce TAC, il subsistera dans l'eau un excès de $Na_2CO_3$ libre, qui communiquera à l'eau un TA et un TAC d'autant plus élevés que la valeur de (2 TAC -TCa) de l'eau brute sera plus grande.

La méthode reste cependant intéressante, si l'on accepte de conserver dans l'eau une certaine teneur en bicarbonates (par exemple dans le traitement d'une eau potable), mais il faut alors réduire la dose de soude à l'équivalent stoechiométrique de TCa / 2.

En conclusion, l'emploi de soude caustique permet d'abaisser la dureté totale d'une eau, sans aucun risque et avec une épuration aussi complète qu'avec la chaux ; cet abaissement de TH sera égal à deux fois la réduction de la teneur en bicarbonates, à la condition que la dose de soude introduite n'excède pas la moitié du titre en calcium de l'eau brute.

Les titres TA et TAC sont alors aussi bas que si l'on avait utilisé la dose équivalente en chaux.

On notera cependant qu'un correctif doit être apporté au calcul de la dose de soude, si l'eau brute contient de l'acide carbonique libre, lequel entraîne une consommation supplémentaire de soude due à la réaction :

$$2\ NaOH + CO_2 \rightarrow Na_2CO_3 + H_2O \quad (6)$$

EQUIPEMENTS MIS EN OEUVRE

Les appareillages dont on dispose dans la technique sont caractérisés par la vitesse du traitement de l'eau, vitesse qui est exprimée de la manière suivante : une vitesse de 1 mètre par heure correspond au traitement de un mètre cube d'eau par mètre carré de surface du réacteur et par heure, c'est-à-dire $lm^3/m^2/h$.

Trois catégories d'équipement ont été ou sont utilisées dans le domaine de la décarbonatation par précipitation :

- les réacteurs « lents », (par exemple des clarificateurs conventionnels modifiés en décarbonateurs et ne comportant qu'une chambre de mélange suivie d'un volume de décantation) ; ces réacteurs sont caractérisés par une vitesse de passage très faible (et donc un encombrement considérable), le temps de résidence étant imposé par la cinétique extrêmement lente de précipitation du carbonate de calcium (l'équilibre de précipitation à température ambiante n'est atteint qu'au bout de 20 à 30 heures après mélange de la chaux ou de la soude à l'eau à traiter). A titre indicatif, la vitesse de traitement possible avec un tel réacteur est de l'ordre de quelques centimètres par heure, pour éviter un risque d'entartrage massif des filtres aval.
- les réacteurs à re-circulation de boues, dans lesquels on réinjecte, en amont du réacteur, une fraction des boues de carbonate de calcium produites au cours de la réaction de décarbonatation, ce qui permet de provoquer un « ensemencement » de l'eau à traiter, pratique qui accélère considérablement la cinétique de réaction ; on peut en effet considérer, dans ce cas, que la réaction de décarbonatation atteint son équilibre en quelques minutes de temps de contact avec les boues (2 à 3 minutes suffisent le plus souvent). Ces réacteurs comportent deux zones bien distinctes : l'une, de volume restreint et en régime très turbulent, permet d'assurer le contact eau à traiter + réactif (chaux ou soude), l'autre assure la séparation eau / boues, donc la clarification de l'eau. On atteint dans ce cas une amélioration notable de la vitesse de traitement, quelques mètres à quelques dizaines de mètres par heure, selon que l'équipement comporte ou non un système de séparation lamellaire.
- enfin, et ceci constitue un cas particulier des réacteurs précédents, les décarbonateurs dits catalytiques, dans lesquels on utilise une masse de sable ou d'un autre matériau minéral inerte sous forme de particules, servant à l'ensemencement du réacteur, les grains de sable s'enrobant progressivement de carbonate de calcium et jouant ensuite le rôle de germes, permettant d'accélérer (ou de « catalyser ») la réaction de décarbonatation. Ces décanteurs sont très compacts, par rapport aux dispositifs décrits ci-dessus, puisqu'ils ne comportent en fait que la zone

réactionnelle décrite dans le cas des réacteurs à recirculation de boues ; la vitesse de traitement dans ces équipements peut atteindre 70 mètres par heure, voire 100 mètres par heure dans les cas les plus favorables. La faculté d'atteindre de telles vitesses limite l'application de ce type de réacteur au cas des « boues lourdes », auxquelles s'applique parfaitement le sable enrobé de carbonate de calcium, mais exclut totalement la clarification d'eaux contenant des précipités « légers », tels que l'hydroxyde de magnésium ou des flocs organiques.

EQUIPEMENTS DE DECARBONATATION DU TYPE DIT « CATALYTIQUE »

La différence essentielle avec les appareils à recirculation de boues mentionnés ci-dessus réside dans l'emploi systématique de germes de grande dimension. Alors que, dans les lits de boues des appareils précédents, la taille des cristaux élémentaires est de l'ordre du 1/100 de mm, les grains d'un décarbonateur catalytique (également dénommé en anglais « pellet reactor ») se situent normalement entre 0,2 et 1 mm et peuvent parfois atteindre plusieurs millimètres.

Il en résulte qu'ils se rassemblent aisément en masse concentrée et que la percolation ascendante de l'eau brute dans un appareil conique permet d'obtenir des réactions complètes et une séparation correcte du précipité avec un volume d'appareil extrêmement réduit et une vitesse ascensionnelle très élevée.

Le réactif et l'eau sont introduits simultanément, à grande vitesse, dans le réacteur, de façon à mettre en mouvement les grains situés à la base de l'appareil et à empêcher leur prise en masse.

Ces grains ont toutefois tendance à grossir indéfiniment, du fait que ce sont toujours les mêmes grains qui reçoivent en premier lieu l'eau brute et le réactif, et il faut donc les purger systématiquement et réintroduire périodiquement des grains fins.

Ce système présente deux avantages spécifiques, qui sont son faible encombrement au sol et, par conséquent, la possibilité d'utiliser l'appareil sous pression. Il permet donc de traiter en décarbonatation une eau sous pression et de la restituer dans le circuit à travers des filtres fermés.

Par ailleurs, les boues de carbonate très fines (grains de 10 à 30 microns) qui sont extraites dans les systèmes à recirculation de boues sont remplacées ici par des billes de l'ordre de 1 à 2 mm de diamètre, s'essorant très rapidement et pouvant être transportées sans traitement complémentaire à une décharge agréée ou encore être réutilisées comme ballast, sous-couche de stabilisation de routes, matériaux de drainage, etc.

En revanche, cette technique présente certains inconvénients, dont les plus importants sont les suivants :

1. Il faut surveiller attentivement l'évolution de la taille des grains de sable gainés de carbonate de calcium, car, si ceux-ci grossissent trop, la surface totale de réaction devient insuffisante et la réaction devient incomplète.
2. L'appareil fonctionne avec des eaux riches en colloïdes organiques et avec des eaux dont le titre magnésien est supérieur à TH -TAC. En effet, dans ce dernier cas, on précipite de la magnésie qui ne syncristallise pas avec le $CaCO_3$ et entrave la décantation rapide, sans laquelle le système n'est pas viable.
3. Les appareils ne peuvent fonctionner que dans des limites de débits assez réduites (variant normalement du simple au double), car, si le débit se ralentit, la masse cesse de se fluidiser et l'on constate la formation de passages préférentiels, se traduisant par l'émission d'eau de mauvaise qualité, voire même par des prises en masse des cristaux.

Il est de toute évidence facile de surmonter les inconvénients cités aux rubriques 2 et 3 ci-dessus, puisqu'il s'agit de problèmes relevant d'une bonne connaissance des caractéristiques de l'eau à traiter et des besoins en eau de l'exploitant. Tous ces aspects peuvent et doivent être définis lors de la préparation du projet d'installation.

En revanche, le problème posé par le contrôle de la croissance des germes de précipitation requiert une surveillance régulière de la masse catalysante et une conception efficace des systèmes d'extraction de « grosses billes » de sable gainé de carbonate de calcium, ainsi qu'un minimum de contrôles et d'entretien.

L'invention concerne précisément ce dernier problème, et de nombreuses recherches dynamiques et divers essais sur installation industrielle ont été effectués par la Demanderesse pour optimiser le dimensionnement et préciser l'utilisation de ces systèmes de décarbonatation du type dit catalytique.

RESUME DE L'INVENTION

L'objectif de l'invention est de permettre, dans un appareillage de décarbonatation catalytique, une extraction régulière et systématique des particules de sable enrobées de carbonate de calcium ayant une taille supérieure à 1,2 mm de diamètre hydraulique.

Dans la technique connue, cette extraction s'effectue par l'intermédiaire de tuyaux flexibles débouchant en l'affleurant à la surface supérieure du plancher du réacteur, à égale distance les uns des autres, et reliés à une canalisation extérieur d'évacuation, le trajet vers l'extérieur de l'appareil se faisant sous le plancher à buselures d'alimentation en eau brute du réacteur, avec traversée de la paroi du dispositif. Cette configuration s'est révélée inappropriée pour assurer

une évacuation régulière et efficace des « grosses billes », tout en n'entraînant qu'un minimum de billes de taille inférieure.

En effet, les tuyaux souples utilisés pour l'extraction de ces grosses billes enrobées n'occupent pas une position fixe définie par rapport au plancher du réacteur, de sorte que, bien qu'ils aient une orientation générale inclinée en direction de la canalisation extérieure d'évacuation située au-dessous du plancher, ils peuvent comporter localement certaines parties recourbées vers le haut, à la partie inférieure desquelles peuvent se déposer et s'accumuler des billes évacuées, avec pour conséquence un colmatage local au moins partiel du tuyau concerné.

On connaît déjà par FR 2 426 024 A un réacteur de déphosphatation des eaux, dans lequel on introduit dans l'eau au moins un réactif apte à former un sel cristallin très peu soluble et à mettre le mélange résultant en contact avec un germe activant la cristallisation. La mise en contact a lieu dans un lit fluidisé de grains de la substance constituant le germe et l'introduction du ou des réactifs est réalisée de manière telle qu'une nucléation hétérogène sensiblement totale ait lieu sur les grains du lit fluidisé. Ces grains peuvent être des grains de sable filtrant calciné et lavé.

Le réactif comprend une lessive alcaline et il doit contenir un ou, de préférence, plusieurs des ions suivants :

- ions hydroxyle ;
- ions fluorure ;
- ions calcium.

La réaction est très rapide et, en quelques minutes, on obtient un taux extrêmement élevé d'élimination du phosphate, et il se forme un composé cristallin insoluble entre le calcium et le phosphate, qui se dépose sur les grains de sable.

Aucune information n'est toutefois donnée dans FR 2 426 024 A sur le risque de colmatage des canalisations d'évacuation par les grains de sable gainés de phosphate cristallin et il est spécifié (page 9, lignes 17-19) que les conditions de mise en oeuvre du procédé peuvent être choisies de façon à exclure presque complètement la formation de carbonate de calcium.

La présente invention s'intéresse à un réacteur de ce même type général, mais dans son application à la décarbonatation catalytique d'une eau contenant une solution de bicarbonate de calcium, et elle vise plus particulièrement à éliminer ou au moins à limiter les risques de colmatage des conduits d'évacuation de ce réacteur par les particules inertes, telles que du sable, gainées de carbonate de calcium.

A cet effet, l'invention a pour objet un dispositif de décarbonatation catalytique d'une eau contenant en solution du bicarbonate de calcium, ce dispositif comprenant un réacteur comportant à sa partie inférieure un plancher interne disposé transversalement, des moyens d'alimentation en eau sous pression et en réactif de décarbonatation de ce réacteur au niveau de la surface supérieure de ce plancher, un lit de particules solides inertes telles que du sable logé dans le réacteur au-dessus du plancher de manière à être traversé de bas en haut par l'eau sous pression et le réactif, au moins un moyen d'évacuation de l'eau traitée à la partie supérieure du réacteur, et des canalisations d'évacuation des particules inertes enrobées de carbonate de calcium ayant un diamètre au moins égal à une dimension prédéterminée et entraînées par de l'eau du réacteur, ces canalisations débouchant dans le réacteur, sensiblement au niveau du plancher par des orifices affleurant le plancher ou la face interne des parois latérales et étant connectées à un conduit extérieur d'évacuation situé à un niveau inférieur à celui du plancher,

ce dispositif étant caractérisé en ce que les canalisations d'évacuation des particules enrobées sont des canalisations rigides, dont le diamètre interne est compris entre 40 et 60 mm et, de préférence, entre 45 et 55 mm, et en ce que, en vue d'assurer une évacuation régulière des particules, sans risque de colmatage de ces canalisations, celles-ci présentant une pente descendante ininterrompue jusqu'à leur raccordement au conduit extérieur d'évacuation, à l'exception, éventuellement, d'une partie horizontale partant de l'orifice par lequel elles débouchent dans le réacteur.

Un paramètre critique des canalisations d'évacuation du réacteur est le diamètre interne de ces canalisations, car, pour des particules inertes enrobées de carbonate de calcium ayant un diamètre hydraulique au moins égal à 1,2 mm, les canalisations rigides doivent avoir, de préférence, un diamètre compris entre 40 et 60 mm et, de façon encore plus préférée, compris entre 45 et 55 mm.

Les essais effectués par la Demanderesse ont montré, en effet, qu'un diamètre inférieur des canalisations se traduit par un colmatage répétitif des tuyauteries rigides d'extraction, alors qu'un diamètre plus important entraîne une sédimentation des particules les plus grosses dans la tuyauterie, en raison d'une vitesse de balayage insuffisante de ces particules par le courant d'eau d'accompagnement, cette vitesse devant être comprise entre 1,8 et 3 mètres par seconde et, de préférence, entre 2 et 2,5 mètres par seconde.

Comme indiqué ci-dessus, les canalisations d'évacuation des particules enrobées de carbonate de calcium peuvent avoir une partie amont horizontale, mais elles doivent présenter ensuite une pente ininterrompue jusqu'à la conduite extérieure à laquelle ces canalisations sont raccordées et qui constitue un collecteur. Dans ce collecteur peut être prévu un apport d'eau additionnelle de balayage, pour faciliter le transfert des particules.

De préférence, ces canalisations d'évacuation débouchent dans le réacteur par des orifices affleurant le plancher, emplacement par lequel s'effectue la purge des particules de grandes dimensions.

Les parties incurvées de ces canalisations ont de préférence un grand rayon de courbure, égal au moins à trois fois leur diamètre.

Un piquage à raccord rapide peut avantageusement être prévu sur chaque canalisation, pour pouvoir procéder au débouchage de celle-ci sous pression élevée, en cas de bouchage intempestif, voire d'opérer un lavage à contre-courant.

Optionnellement, un système automatique de commande de l'évacuation des particules inertes enrobées de carbonate de calcium ayant un diamètre au moins égal à une valeur prédéterminée peut être prévu, ce système étant indexé sur la durée réelle de séjour de l'eau traitée dans le réacteur.

On notera que le réactif de décarbonatation utilisé peut être suivant les besoins de la chaux Ca $(OH)_2$ ou de la soude Na OH.

La mise en oeuvre de ces diverses caractéristiques permet d'optimiser la purge des particules enrobées de carbonate de calcium les plus grosses, en minimisant le volume d'eau d'accompagnement extrait du réacteur d'un facteur d'environ 20 %, et par ailleurs d'extraire davantage de grosses particules par rapport à l'ensemble de la masse évacuée lors de chaque purge. On constate, en effet, qu'avec le dispositif conforme à l'invention, de 70 à 85 % des particules extraites sont des « grosses billes », alors que, selon la technique connue, ce pourcentage ne dépasse pas 35 à 45 %.

FORME DE MISE EN OEUVRE PREFEREE DE L'INVENTION

Une forme de mise en oeuvre préférée de l'invention va être décrite ci-après, en référence aux dessins schématiques annexés, sur lesquels :

La figure 1 est une coupe verticale schématique d'un dispositif de la technique antérieure ;
La figure 2 est une coupe analogue d'un dispositif conforme à l'invention.

On se référera d'abord à la figure 1, qui représente un réacteur cylindrique vertical 1, alimenté à sa partie inférieure, par une ligne 2, en eau à traiter sous pression, contenant en solution du bicarbonate de calcium. La ligne 2 débouche dans le réacteur 1 au-dessous d'un plancher 3 disposé horizontalement et l'eau est diffusée sous pression dans le réacteur par des buselures 4 réparties régulièrement au niveau de la surface supérieure du plancher 3.

Une ligne 9 permet d'introduire dans le réacteur le réactif de décarbonatation (chaux ou soude).

Un lit de sable 5, disposé au-dessus du plancher 3, est traversé de bas en haut par l'eau sous pression à traiter, tandis que l'eau traitée est évacuée à la partie supérieure du réacteur par débordement dans une ou plusieurs goulottes extérieures 6.

Au contact du réactif de décarbonatation, le bicarbonate de calcium présent dans l'eau à traiter réagit et se convertit en carbonate de calcium $CaCO_3$, qui se dépose sur les grains de sable, lesquels constituent autant de germes de cristallisation, mais cette réaction se produit essentiellement à la partie inférieure du lit 5, où les eaux sont les plus riches en bicarbonate de calcium et en réactif de décarbonatation.

Il en résulte que les grains de sable déposés à la base du lit 5 ont tendance à constituer des particules enrobées de carbonate de calcium beaucoup plus grosses qu'à la partie supérieure du lit et il est donc nécessaire d'effectuer des purges périodiques ou continues de celles de ces particules qui atteignent ou dépassent un diamètre hydraulique supérieur ou égal à une valeur prédéterminée, généralement de l'ordre de 1,2 mm.

Dans ce but, selon la technique usuelle, sont prévus des tuyaux flexibles 7 d'évacuation de ces grosses particules, tuyaux qui débouchent au niveau de la surface supérieure du plancher par des orifices affleurant cette surface et qui sont raccordés à un collecteur 8 situé à un niveau inférieur à celui du plancher 1, dans lequel les grosses particules sont entraînées par un courant d'eau d'accompagnement provenant du réacteur.

Ces tuyaux flexibles 7 n'occupent cependant pas des positions fixes par rapport au plancher et ils ont donc tendance à se déplacer ou à se déformer en cours d'utilisation. Par ailleurs, ils n'ont pas une pente inclinée continuellement vers le bas, en direction du collecteur 8, et les risques de colmatage de ces tuyaux 7 par les grosses particules extraites du réacteur sont donc élevés.

Ce risque est minimisé avec le réacteur conforme à l'invention, représenté sur la figure 2.

Sur cette figure 2, les organes déjà décrits en référence à la figure 1 ou ayant des fonctions similaires sont désignés par les mêmes chiffres de référence affectés de l'indice'.

Dans cette forme de réalisation conforme à l'invention, aux tuyaux d'évacuation flexibles 7 de la technique antérieure ont été substituées des canalisations rigides 7'a, occupant des positions fixes par rapport au plancher 3' et inclinées de façon continue vers le bas, suivant une pente descendante ininterrompue, en direction du collecteur 8, de manière à supprimer ou à minimiser les risques de colmatage de ces canalisations.

Sans sortir du cadre de l'invention, les canalisations rigides d'évacuation peuvent aussi déboucher dans le réacteur à la base des parois latérales de celui-ci et comporter une partie amont horizontale dont l'axe est situé sensiblement au niveau de la face du plancher tournée vers l'intérieur du réacteur (cas des canalisations représentées en traits interrompus en 7'b sur la figure 2).

Les canalisations ont un diamètre spécifique, par exemple de 50 mm, et leurs parties recourbées ont de préférence un grand rayon de courbure au moins égal à trois fois le diamètre de la tuyauterie et de l'ordre de 15 cm pour un diamètre de 50 mm.

Dans ces conditions, avec une vitesse appropriée de balayage des particules dans ces canalisations par l'eau d'accompagnement extraite du réacteur, vitesse comprise entre 1, 8 et 3 mètres par seconde, de préférence comprise entre 2 et 2,5 m/s, on réduit considérablement les risques de colmatage des canalisations 7' et, comme indiqué ci-dessus, non seulement le volume d'eau d'accompagnement nécessaire est minimisé, mais il est possible d'extraire un pourcentage beaucoup plus élevé de gros grains de sable enrobés de carbonate de calcium que selon la technique antérieure.

## Revendications

1. Dispositif de décarbonatation catalytique d'une eau contenant en solution du bicarbonate de calcium, ce dispositif comprenant un réacteur (1') comportant à sa partie inférieure un plancher (3'), au moins des moyens d'alimentation en eau sous pression (2', 4') et en réactif de décarbonatation (9') de ce réacteur au niveau de la surface supérieure de ce plancher, un lit (5') de particules solides inertes telles que du sable logé dans le réacteur (1') au-dessus du plancher (3') de manière à être traversé de bas en haut par l'eau sous pression et le réactif, au moins un moyen d'évacuation (6') de l'eau traitée à la partie supérieure du réacteur (1), et des canalisations (7'a, 7'b) d'évacuation des particules inertes enrobées de carbonate de calcium ayant un diamètre au moins égal à une dimension prédéterminée et entraînées par de l'eau du réacteur, ces canalisations (7'a, 7'b) débouchant dans le réacteur au niveau du plancher (3') par des orifices affleurant le plancher ou la face interne des parois latérales, et étant connectées à un conduit extérieur d'évacuation (8') situé à un niveau inférieur à celui du plancher,
ce dispositif étant **caractérisé en ce que** les canalisations (7'a, 7'b) d'évacuation des particules enrobées sont des canalisations rigides, dont le diamètre intérieur est compris entre 40 et 60 mm et, de préférence, entre 45 et 55 mm, et **en ce que**, en vue d'assurer une évacuation régulière des particules, sans risque de colmatage, ces conduites présentent une pente descendante ininterrompue jusqu'à leur raccordement au conduit extérieur d'évacuation (8'), à l'exception, éventuellement, d'une partie horizontale partant de l'orifice par lequel elles débouchent dans le réacteur (1').

2. Dispositif selon la revendication 1, **caractérisé en ce que** les parties recourbées des canalisations (7'a, 7'b) ont un rayon de courbure au moins égal à trois fois le diamètre de celles-ci.

3. Utilisation du dispositif selon l'une des revendications 1 et 2, pour l'évacuation hors du réacteur (1') de particules inertes enrobées de carbonate de calcium ayant un diamètre hydraulique au moins égal à 1,2 mm.

4. Utilisation selon la revendication 3, **caractérisée en ce que** la vitesse de balayage des particules enrobées de carbonate de calcium par le courant d'eau d'accompagnement, dans les canalisations (7'a, 7'b) est comprise entre 1,8 mètre par seconde et 3 mètres/s, de préférence, entre 2 et 2,5 mètres par seconde.

5. Utilisation selon l'une des revendications 3 et 4, **caractérisée en ce que** le réactif de décarbonatation comprend de la chaux ou de la soude.

## Claims

1. A device for the catalytic decarbonation of water containing calcium bicarbonate in solution, this device comprising a reactor (1') including in its lower part a floor (3'), at least means for supplying water under pressure (2',4') and decarbonation reagent (9') for said reactor at the level of the upper surface of said floor, a bed (5') of solid inert particles, such as sand, disposed in the reactor (1') above the floor (3') in such a way as to be traversed from the bottom upwards by the water under pressure and the reagent, at least one means (6') for discharging the treated water at the upper part of the reactor (1), and discharge pipes (7'a,7'b) for the inert particles coated with calcium carbonate having a diameter at least equal to a predetermined dimension and entrained by water from the reactor, said pipes (7'a,7'b) opening into the reactor at the level of the floor (3') through orifices flush with the floor or the inner surface of the side walls, and being connected to an outer discharge conduit (8') situated at a lower level than that of the floor,

said device being **characterised in that** the discharge pipes (7'a,7'b) for the coated particles are rigid pipes whose inner diameter is between 40 and 60 mm and, preferably between 45 and 55 mm, and **in that**, with a view to ensuring a regular discharge of the particles without risk of clogging, said pipes have an uninterrupted downward incline up to their connection with the outer discharge conduit (8'), with the possible exception of a horizontal portion starting from the orifice through which they open into the reactor(1').

**2.** A device according to claim 1, **characterised in** the curved parts of the pipes (7'a,7'b) have a radius of curvature at least equal to three times the diameter thereof.

**3.** Use of the device according to either one of claims 1 and 2 for the discharge from the reactor (1') of inert particles coated with calcium carbonate and of a hydraulic diameter at least equal to 1.2 mm.

**4.** Use according to claim 3, **characterised in that** the flushing rate of particles coated with calcium carbonate by the accompanying flow of water in the pipes (7'a,7'b) is between 1.8 metres per second and 3 metre/s, preferably between 2 and 2.5 metres per second.

**5.** Use according to either one of claims 3 and 4, **characterised in that** the decarbonation reagent comprises lime or soda.

**Patentansprüche**

**1.** Vorrichtung zur katalytischen Decarbonisierung eines in einer Lösung von Calciumbicarbonat enthaltenen Wassers, wobei diese Vorrichtung einen Reaktor (1'), der an seinem unteren Teil einen Boden (3') enthält, mindestens Zufuhrmittel für Wasser unter Druck (2', 4') und für Decarbonisierungsreagenz (9') dieses Reaktors auf Höhe der oberen Oberfläche dieses Bodens, ein Bett (5') aus inerten, festen Partikeln, wie im Reaktor (1') über dem Boden (3') untergebrachter Sand, derart, dass es vom unter Druck gesetzten Wasser und vom Reagenz von unten nach oben durchlaufen wird, mindestens ein Ableitungsmittel (6') des am oberen Teil des Reaktors (1) behandelten Wassers, und Leitungen (7'a und 7'b) zur Ableitung der von Calciumcarbonat umhüllten inerten Partikel, die einen Durchmesser von mindestens einer festgelegten Größe aufweisen und von dem Reaktorwasser mitgerissen werden, umfasst, wobei diese Leitungen (7'a, 7'b) in den Reaktor auf der Höhe des Bodens (3') durch Öffnungen, die im Boden oder an der Innenseite der Seitenwände zum Vorschein kommen, einmünden und mit einer äußeren Ableitungsleitung (8') verbunden sind, die sich auf einer geringeren Höhe als derjenigen des Bodens befindet, wobei diese Vorrichtung **dadurch gekennzeichnet ist, dass** die Leitungen (7'a, 7'b) zur Ableitung der umhüllten Partikel starre Leitungen sind, deren Innendurchmesser zwischen 40 und 60 mm und bevorzugt zwischen 45 und 55 mm aufweist, und **dadurch**, dass Hinblick darauf, dass eine gleichmäßige Ableitung der Partikel ohne Verstopfungsrisiko gewährleistet wird, diese Leitungen ein bis zu ihrer Verbindung zum äußeren Ableitungsrohr (8') ununterbrochen abwärts gerichtetes Gefälle aufweisen, gegebenenfalls mit Ausnahme eines horizontalen Teils, der von der Öffnung abgeht, durch welche sie in den Reaktor (1') münden.

**2.** Vorrichtung gemäß Anspruch 1, **dadurch gekennzeichnet, dass** gekrümmte Teile der Leitungen (7'a, 7'b) einen Krümmungsradius von mindestens dem Dreifachen ihres Durchmessers aufweisen.

**3.** Verwendung der Vorrichtung gemäß einem der Ansprüche 1 und 2 zur Ableitung von mit Calciumcarbonat umhüllten inerten Partikeln, die einen hydraulischen Durchmesser von mindestens 1,2 mm aufweisen, nach außerhalb des Reaktors (1').

**4.** Verwendung gemäß Anspruch 3, **dadurch gekennzeichnet, dass** die Ableitungsgeschwindigkeit der mit Calciumcarbonat umhüllten Partikeln durch den begleitenden Wasserstrom in den Leitungen (7'a, 7'b) zwischen 1,8 Meter pro Sekunde und 3 Meter/s, bevorzugt zwischen 2 und 2,5 Meter pro Sekunde liegt.

**5.** Verwendung gemäß einem der Ansprüche 3 und 4, **dadurch gekennzeichnet, dass** das Reagenz zur Decarbonisierung Kalk oder Soda umfasst.

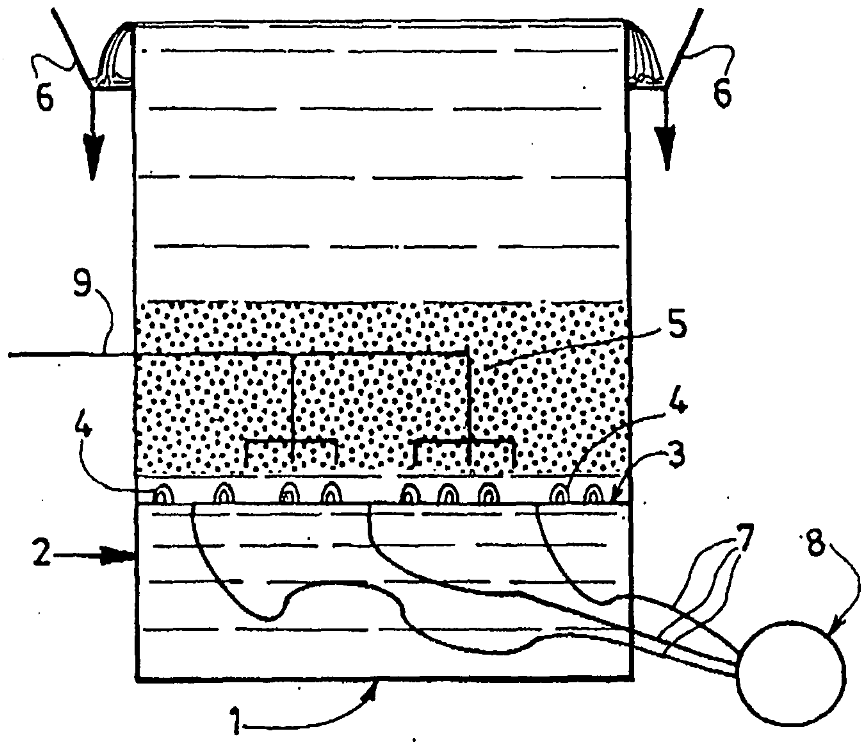


FIG.1

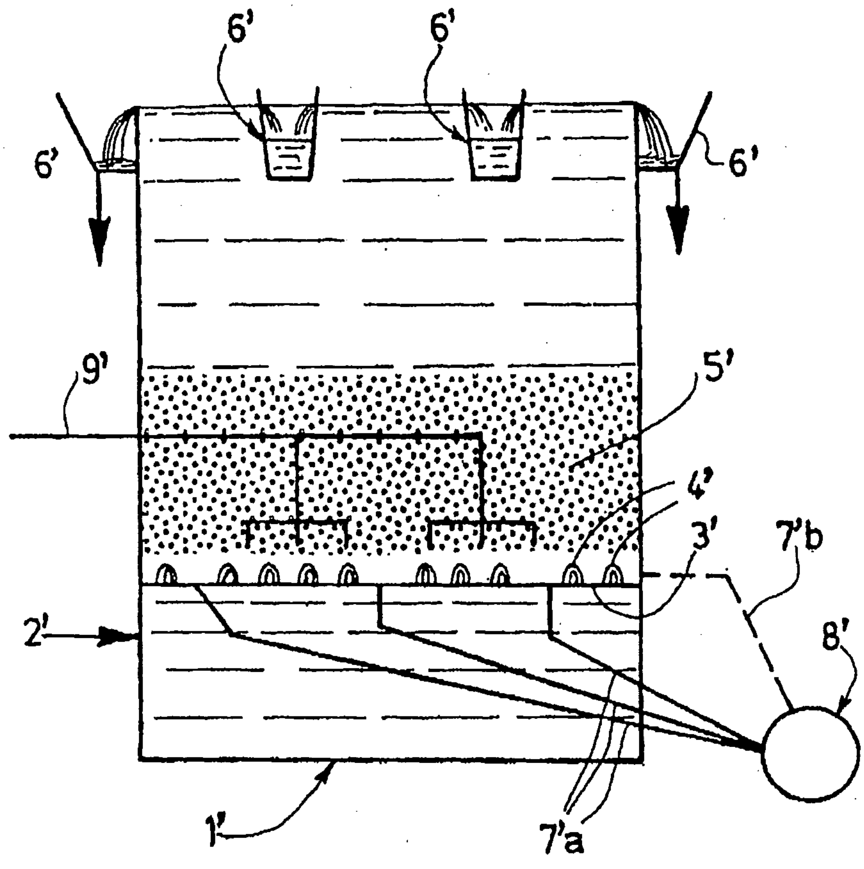


FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2426024 A